(19) Europäisches Patentamt
European Patent Office
Office européen des brevets

(11) EP 4 241 574 A1

(12) EUROPEAN PATENT APPLICATION
published in accordance with Art. 153(4) EPC

(43) Date of publication:
13.09.2023 Bulletin 2023/37

(51) International Patent Classification (IPC):
A23L 3/28 (2006.01)        A23L 3/3589 (2006.01)

(21) Application number: 21889215.6

(52) Cooperative Patent Classification (CPC):
A23L 3/28; A23L 3/3589

(22) Date of filing: 04.11.2021

(86) International application number:
PCT/JP2021/040501

(87) International publication number:
WO 2022/097662 (12.05.2022 Gazette 2022/19)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 04.11.2020 JP 2020184171

(71) Applicant: Panasonic Intellectual Property
Management Co., Ltd.
Osaka-shi, Osaka 540-6207 (JP)

(72) Inventors:
• INO, Daisuke
Kadoma-shi, Osaka 571-0057 (JP)
• HASHIMOTO, Yasuhiro
Kadoma-shi, Osaka 571-0057 (JP)

(74) Representative: Eisenführ Speiser
Patentanwälte Rechtsanwälte PartGmbB
Postfach 31 02 60
80102 München (DE)

(54) FOOD PRODUCT PROCESSING DEVICE

(57) A food processing apparatus 1a of the present disclosure includes a container 10, a catalyst film 20, and a light source 30. The container 10 has a space 15 for containing food F. The catalyst film 20 has an active surface 21a in contact with the space 15. The light source 30 is disposed at a position closer to a main surface 22a of the catalyst film 20 located on a side opposite to the active surface 21a than to the active surface 21a in a thickness direction of the catalyst film 20. The light source 30 emits ultraviolet light U toward the catalyst film 20. An absorptivity of the catalyst film 20 for the ultraviolet light U is 50% or more.

FIG.1

**Description**

TECHNICAL FIELD

The present disclosure relates to a food processing apparatus.

BACKGROUND ART

Conventionally, photocatalysts have been known to be used for processing food.

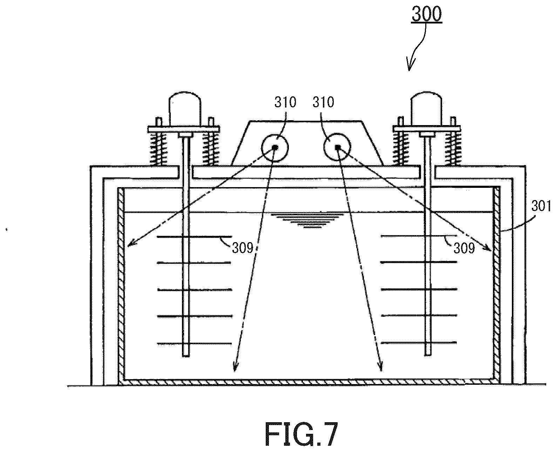

For example, Patent Literature 1 describes a method for producing a brewed product using a photocatalyst. In this production method, when sterilizing the brewed product, a photocatalyst supported on the surface of a specific member such as an agitating member is irradiated with excitation light while the brewed product placed in a tank is being agitated by the agitating member at room temperature. As shown in FIG. 7, Patent Literature 1 describes a microorganism sterilization apparatus 300 used for the production of sake, which is an example of the method for producing a brewed product. According to FIG. 7, in the microorganism sterilization apparatus 300, light sources 310 of excitation light are disposed outside a tank 301. In addition, an anatase type titanium oxide film is formed on each of the surfaces of agitating blades 309.

CITATION LIST

Patent Literature

Patent Literature 1: JP 2003-250514

SUMMARY OF INVENTION

Technical Problem

The present disclosure provides a food processing apparatus that is advantageous in terms of increasing a reaction rate while suppressing alteration of food when processing the food using light.

Solution to Problem

A food processing apparatus of the present disclosure includes:

a container having a space for containing food;
a catalyst film having an active surface in contact with the space; and
a light source disposed at a position closer to a main surface of the catalyst film located on a side opposite to the active surface than to the active surface in a thickness direction of the catalyst film, and configured to emit ultraviolet light toward the catalyst film, wherein
an absorptivity of the catalyst film for the ultraviolet light is 50% or more.

Advantageous Effects of Invention

The food processing apparatus of the present disclosure is advantageous in terms of increasing a reaction rate while suppressing alteration of food.

BRIEF DESCRIPTION OF THE DRAWINGS

FIG. 1 is a cross-sectional view schematically showing a food processing apparatus of Embodiment 1.
FIG. 2 is a cross-sectional view of an apparatus for evaluating the properties of catalyst films having various thicknesses.
FIG. 3 shows intensity spectra of light used in the apparatus shown in FIG. 2.
FIG. 4A is a graph showing the relationship between the reaction rate constant of a formic acid decomposition reaction and the thickness of a catalyst film.
FIG. 4B is a graph showing the relationship between the reaction rate constant of a formic acid decomposition reaction and the thickness of a catalyst film.

FIG. 4C is a graph showing the relationship between the reaction rate constant of a formic acid decomposition reaction and the thickness of a catalyst film.

FIG. 5 is a graph showing the relationship between the upper and lower limits of the thickness of a catalyst film and the wavelength of excitation light.

FIG. 6 is a graph showing the relationship between the relative intensities of anatase and rutile phases in an X-ray diffraction (XRD) pattern of a catalyst film and a firing temperature.

FIG. 7 is a diagram showing a microorganism sterilization apparatus according to a conventional art.

DESCRIPTION OF EMBODIMENTS

(Findings on which the present disclosure is based)

When processing food using a photocatalyst, it is conceivable to irradiate the photocatalyst, which is disposed inside a container in which the food is contained, with excitation light from the outside of the container. For example, in the microorganism sterilization apparatus 300 described in Patent Literature 1, the anatase type titanium oxide film formed on the surface of each agitating blade 309 is irradiated with the light from the light source 310 which is located outside the tank 301.

Meanwhile, according to the study by the present inventors, the present inventors have found that if excitation light including ultraviolet light passes through food contained in a container before being incident on a photocatalyst, the ultraviolet light may cause alteration or deterioration of components contained in the food, which should not occur. Therefore, the present inventors have studied intensively, and as a result, the present inventors have newly found that causing ultraviolet light emitted from a light source to be incident on a catalyst film from a main surface of the catalyst film on the side opposite to an active surface of the catalyst film is advantageous in terms of preventing alteration or deterioration of components contained in food. The present inventors have further studied and newly found that the reaction rate of a reaction for processing food can be increased when a catalyst film satisfies a predetermined condition. Based on such new findings, the present inventors have completed the food processing apparatus of the present disclosure.

(Embodiments of the present disclosure)

Hereinafter, embodiments of the present disclosure will be described with reference to the drawings. The embodiments described below are all comprehensive or specific examples. The numerical values, shapes, materials, components, arrangement positions of the components, connection forms, process conditions, steps, order of the steps, etc., shown in the following embodiments are examples, and are not intended to limit the present disclosure. In addition, among the components in the following embodiments, the components that are not described in the independent claims that represent broadest concepts are described as discretionary components. Each drawing is a schematic diagram, and is not necessarily exactly illustrated.

(Embodiment 1)

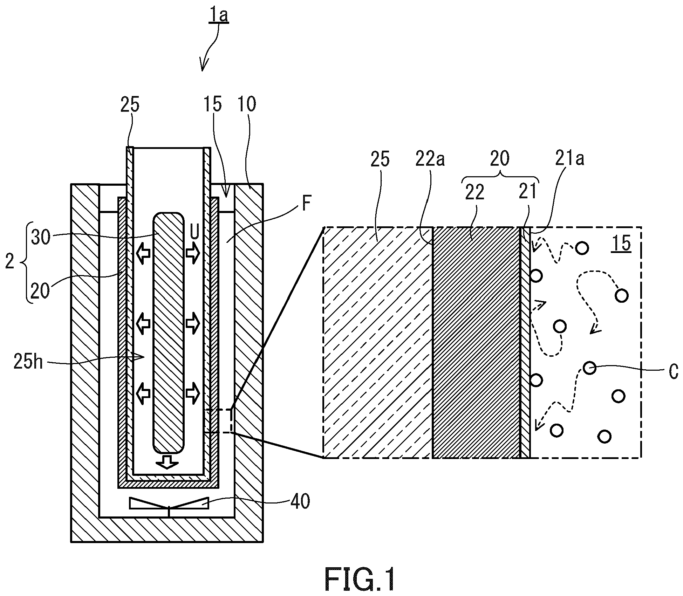

FIG. 1 is a cross-sectional view schematically showing a food processing apparatus 1a of Embodiment 1. The food processing apparatus 1a includes a container 10, a catalyst film 20, and a light source 30. The container 10 has a space 15 for containing food F. The food F may be a food material. The catalyst film 20 has an active surface 21a in contact with the space 15. The light source 30 is disposed at a position closer to a main surface 22a of the catalyst film 20 located on the side opposite to the active surface 21a than to the active surface 21a in the thickness direction of the catalyst film 20. The light source 30 emits ultraviolet light U toward the catalyst film 20. The absorptivity of the catalyst film 20 for the ultraviolet light U is 50% or more.

Most of the amount of the ultraviolet light U incident on the main surface 22a of the catalyst film 20 is absorbed in the catalyst film 20. By the absorption of the ultraviolet light U in the catalyst film 20, a large number of excitons are generated in the catalyst film 20. For example, excitons are generated as electron-hole pairs over a wide range of the catalyst film 20 by the interaction between the catalyst film 20 and the ultraviolet light U. The excitons have a finite lifetime of several nanoseconds to several tens of nanoseconds and diffuse through the catalyst film 20 during the lifetime thereof. For example, the concentration of the excitons in the catalyst film 20 decreases exponentially from the main surface 22a toward the active surface 21a. Many of the excitons reach the interface between the active surface 21a and the food F by diffusion due to such a concentration gradient. The excitons that have reached the interface cause charge transfer reactions between oxygen molecules, water molecules, and reaction substrates contained in the food F and the catalyst film 20 to produce active species. As a result, photochemical reactions required for processing the food F proceed selectively. The excitons generated by the interaction between the catalyst film 20 and the ultraviolet light U may be charge-separated and behave as carriers such as electrons and holes.

Food including food materials are sensitive to ultraviolet light irradiation. When food is irradiated with ultraviolet light, the food may be altered or deteriorated, and odor such as rotten odor, malodor, and artificial odor, which are different from the original flavor of the food, may be perceived. Flavor, taste, and texture are the three major elements of food. Among them, flavor is an important element. Therefore, the generation of such odor can greatly reduce the value of the food. Meanwhile, in the food processing apparatus 1a, since most of the amount of the ultraviolet light U is absorbed in the catalyst film 20 before the ultraviolet light U reaches the food F, the food F is less likely to be irradiated with ultraviolet light having high intensity. The absorptivity of the catalyst film 20 for the ultraviolet light U can be changed according to the wavelength of the ultraviolet light U emitted from the light source 30. Therefore, various types of light sources can be used as the light source 30. As described above, the food processing apparatus 1a can prevent alteration or deterioration of food due to ultraviolet light, and can mainly promote target reactions for food processing.

Among various chemical reactions involving organic substances contained in food, there are photochemical reactions in which light plays an important role. Photocatalytic reactions, which occur as a result of the interaction of light with solid catalysts, etc., are also photochemical reactions. In order to distinguish photocatalytic reactions that occur as a result of the interaction of light with solid catalysts, and photochemical reactions that occur as a result of the direct interaction of light with organic molecules, here, the latter is referred to as "organic photochemical reactions".

For organic photochemical reactions to occur, light absorption by molecules that are to react is required. Light absorption is caused by functional groups or molecular skeletons that form the molecules. Among various organic molecules, those having light absorption in the wavelength range of 250 nm to 450 nm are benzenes, pyridines, thiophenes, furans, and compounds having carbon-oxygen double bonds such as a carbonyl group. These compounds can be included in the aromatic compounds that interact with the human sense of smell. Since food is a mixture of a wide variety of macromolecules and low molecular weiht molecules, it is extremely difficult to trace the individual organic photochemical reactions of the above compounds at the molecular level. On the other hand, when food in which organic photochemical reactions have occurred is examined by sensory evaluation using the human sense of smell, it can be checked whether or not odor, which is different from the original aroma of the food, has been generated.

The processing of the food F performed using the food processing apparatus 1a is not limited to any specific processing. The processing may be for sterilization of the food F, or may be for changing a component contained in the food F to another component. The food processing apparatus 1a may be used for brewing, or may be used for food production and food processing other than brewing.

For example, the thickness of the catalyst film 20 is adjusted such that the absorptivity of the catalyst film 20 for the ultraviolet light U is 50% or more. The thickness of the catalyst film 20 can be determined, for example, based on an interference pattern appearing in a transmission spectrum of the catalyst film 20.

The absorptivity of the catalyst film 20 for the ultraviolet light U can be determined, for example, by the following method. An emission spectrum at the light source 30 is obtained, and a wavelength range $\Delta\lambda$ corresponding to the full width at half maximum for the maximum light intensity is specified in the emission spectrum. An absorption spectrum of the catalyst film 20 is measured using a spectrophotometer. An integral value $I_I$ of the light intensity of the emission spectrum in the wavelength range $\Delta\lambda$ is obtained. An integral value $I_A$ of the light intensity absorbed by the catalyst film 20 in this wavelength range is obtained based on the absorption spectrum of the catalyst film 20. An absorptivity A is determined from Expression (1) based on the integral value $I_I$ and the integral value $I_A$.

$$A[\%] = 100 \times I_A/I_I \quad \text{Expression (1)}$$

The absorptivity of the catalyst film 20 for the ultraviolet light U may be 55% or more, may be 60% or more, or may be 70% or more. The absorptivity of the catalyst film 20 for the ultraviolet light U may be 100%, may be 98% or less, or may be 95% or less.

Regarding light absorption in a material, Lambert's law, shown in Expression (2) below, is known. In Expression (2), $I_0$ denotes incident light intensity when light propagates through the material, I denotes transmitted light intensity, $\alpha$ denotes an absorption coefficient, and d denotes the thickness of the material. The absorption coefficient $\alpha$ is related to the response characteristics of the material to ultraviolet light, and is a function of wavelength. In the catalyst film 20, the shorter the wavelength of light is, the greater the value of the absorption coefficient $\alpha$ is likely to be.

$$\log(I_0/I) = \alpha d \quad \text{Expression (2)}$$

If the interaction between ultraviolet light and a catalyst film is strong and the absorption coefficient $\alpha$ of the material that forms the catalyst film is high, the light intensity of the ultraviolet light incident on the catalyst film significantly decreases when the ultraviolet light propagates through a part of the catalyst film. Therefore, it is difficult for the ultraviolet light to propagate to a main surface of the catalyst film on the side opposite to the incident surface of the catalyst film on which the ultraviolet light has been incident. On the other hand, if the interaction between ultraviolet light and a catalyst film is weak and the absorption coefficient $\alpha$ of the material that forms the catalyst film is low, the ultraviolet light incident on the catalyst film propagates to a main surface of the catalyst film on the side opposite to the incident surface of the catalyst film on which the ultraviolet light has been incident. The light intensity of the ultraviolet light does not decrease much, and the ultraviolet light leaks out of the catalyst film. The catalyst film 20 preferably has an absorption coefficient $\alpha$ [cm$^{-1}$] in a predetermined range for a wavelength $\lambda$ of the ultraviolet light U. The absorption coefficient $\alpha$ for the wavelength $\lambda$ of the ultraviolet light U is, for example, 1971.8 cm$^{-1}$ when the wavelength $\lambda$ is 365 nm, is 7347.3 cm$^{-1}$ when the wavelength $\lambda$ is 350 nm, and is 18039.7 cm$^{-1}$ when the wavelength $\lambda$ is 330 nm. In other words, the absorption coefficient $\alpha$ is, for example, 1971.8 cm$^{-1}$ to 18039.7 cm$^{-1}$. Accordingly, the decrease in the light intensity of the ultraviolet light U in the catalyst film 20 is easily adjusted to a desired degree.

The wavelength of the ultraviolet light U emitted from the light source 30 is not limited to any specific value, and is, for example, 320 nm to 375 nm. Accordingly, the ultraviolet light U is appropriately absorbed in the catalyst film 20.

The light source 30 is not limited to any specific light source, and can be, for example, a high-pressure mercury lamp, a low-pressure mercury lamp, a fluorescent lamp type light source containing a fluorescent agent, or a light emitting diode (LED). The light source 30 is preferably a monochromatic light source. In this case, since the wavelength range of the ultraviolet light U is narrow, the thickness of the catalyst film 20 is easily adjusted.

Typically, there are upper and lower limits for the thickness of the catalyst film 20. This is because the emission spectrum of the light source 30 is not expressed as a delta function, but has a finite spectral width, and an ultraviolet light absorption spectrum which is the ultraviolet light response characteristics of the catalyst film 20 is a continuous function.

The thickness of the catalyst film 20 is, for example, equal to or greater than the value of a function F($\lambda$) shown in Expression (3) below in which the wavelength of the ultraviolet light U is a variable, and is equal to or less than the value of a function G($\lambda$) shown in Expression (4) below in which the wavelength of the ultraviolet light U is a variable. In this case, the ultraviolet light U is satisfactorily absorbed in the catalyst film 20 and a large number of excitons are generated and diffuse through the catalyst film 20, so that the reaction rate of the reaction for processing the food F is likely to be increased. In addition, the intensity of transmitted light upon the incidence of the ultraviolet light U on the catalyst film 20 is likely to be decreased, so that the food F can be prevented from being altered or deteriorated. The units of F($\lambda$) and G($\lambda$) are [nm], and the value of $\lambda$ indicated in [nm] is substituted into F($\lambda$) and G($\lambda$).

$$F(\lambda) = 45673.65 - 284.65329\lambda + 0.44409\lambda^2 \quad \text{Expression (3)}$$

$$G(\lambda) = 149923.62 - 882.77357\lambda + 1.33037\lambda^2 \quad \text{Expression (4)}$$

The catalyst film 20 may be a film having a plurality of layers, or may be a singlelayer film. As shown in FIG. 1, the catalyst film 20 has, for example, a surface layer 21 and an absorption layer 22. The surface layer 21 has the active surface 21a. The absorption layer 22 has the main surface 22a. The absorption layer 22 is responsible for absorbing the ultraviolet light U, generating excitons, and moving the generated excitons toward the active surface 21a. The surface layer 21 is responsible for causing charge transfer reactions at the interface between the active surface 21a and the food F.

The absorption layer 22 can serve as an absorbing medium for the ultraviolet light U. The number of charge transfer reactions that occur at the interface between the active surface 21a and the food F is never greater than the number of photons absorbed by the catalyst film 20. Therefore, in order to increase the reaction rate of the reaction for processing the food F, it is preferable that the ultraviolet light U incident on the catalyst film 20 is sufficiently absorbed inside the absorption layer 22. For example, the thickness of the absorption layer 22 is adjusted such that the thickness of the catalyst film 20 is equal to or greater than F($\lambda$). The absorption layer 22 can also serve as a conducting medium for excitons. Excitons generated inside the absorption layer 22 can diffuse through the inside of the absorption layer 22 and reach the interface between the active surface 21a and the food F in a finite lifetime $\tau$ (seconds) of several nanoseconds to several tens of nanoseconds. Excitons that fail to reach this interface become deactivated by recombination between excited electrons and holes. In this case, the light energy used to generate the excitons is converted into heat energy without causing any chemical reaction, and is wasted. Therefore, for example, the thickness of the absorption layer 22 is adjusted such that the thickness of the catalyst film 20 is equal to or less than G($\lambda$).

When the diffusion velocity of excitons in the catalyst film 20 is represented by v [$\mu$m/sec], the maximum diffusion distance of the excitons can be approximated as $\tau \times v$. "$\tau$" reflects the excited state dynamics of the excitons and is affected by factors such as the electronic state and defect density of the material. In addition, the crystal phase in the catalyst film 20 can also affect "$\tau$". By adjusting the material of the absorption layer 22 in view of these factors, the reaction rate of the reaction required for processing the food F using the food processing apparatus 1a can be more reliably increased.

The surface layer 21 has the active surface 21a and promotes catalytic reactions. The elementary processes of the catalytic reactions are chemical reactions that occur on solid surfaces. Therefore, the performance as a catalyst is easily determined by a microstructure at the active surface 21a, and not by a structure as a whole. The active surface 21a has, for example, a predetermined microstructure such as surface irregularities. Accordingly, the surface area of the active surface 21a is likely to be increased. As a result, the reaction rate of the reaction required for processing the food F can be more reliably increased by sufficiently increasing the rate of material transport of a component C contained in the food F to the active surface 21a.

Each of the thickness of the surface layer 21 and the thickness of the absorption layer 22 is not limited to any specific value as long as the absorptivity of the catalyst film 20 for the ultraviolet light U is 50% or more. The thickness of the absorption layer 22 is, for example, larger than the thickness of the surface layer 21. Accordingly, the ultraviolet light U can be satisfactorily absorbed in the absorption layer 22. The thickness of the surface layer 21 may be, for example, several nanometers to several tens of nanometers. When the thickness of the surface layer 21 is several nanometers, the surface layer 21 can be formed, for example, as a single layer. When the thickness of the surface layer 21 is several tens of nanometers, the surface layer 21 can be formed, for example, as a plurality of layers. Each of the thickness of the surface layer 21 and the thickness of the absorption layer 22 can be determined, for example, based on an electron microscope image of a cross-section of the catalyst film 20. In this case, each of the thickness of the surface layer 21 and the thickness of the absorption layer 22 can be determined as the arithmetic mean of thicknesses at 10 or more randomly selected locations.

The catalyst film 20 contains, for example, a metal oxide. Accordingly, the ultraviolet light U can be satisfactorily absorbed in the catalyst film 20, so that the reaction rate of the reaction for processing the food F can be more reliably increased.

The metal oxide contained in the catalyst film 20 is not limited to any specific metal oxide, and may be, for example, titanium oxide, zinc oxide, silicon oxide, aluminum oxide, or zeolite. In this specification, oxides containing silicon are included in the "metal oxide".

The metal oxide contained in the catalyst film 20 may have a composition of $Ti_mO_n$. This composition satisfies conditions of $1 \leq m \leq 2$ and $2 \leq n \leq 3$. In this case, the reaction rate of the reaction for processing the food F can be more reliably increased.

In the catalyst film 20, the material that forms the surface layer 21 and the material that forms the absorption layer 22 may be the same type of material, or may be different types of materials. For example, in the catalyst film 20, if the material that forms the surface layer 21 and the material that forms the absorption layer 22 are different materials, it is easy to enhance the function of the absorption layer 22 while enhancing the function of the surface layer 21.

A relative intensity $I_{KA}$ of an anatase phase and a relative intensity $I_{KR}$ of a rutile phase in an XRD pattern of the absorption layer 22 satisfy, for example, conditions of $0.6 \leq I_{KA} \leq 1.0$ and $I_{KR} \leq 0.2$. Meanwhile, the surface layer 21 contains, for example, an anatase phase and substantially contains no rutile phase. Accordingly, the reaction rate of the reaction for processing the food F can be increased more. Substantially containing no rutile phase means that the relative intensity of the rutile phase in an XRD pattern can be regarded as zero. In the absorption layer 22, the maximum diffusion distance of excitons is simply positively correlated with the relative intensity $I_{KA}$ of the anatase phase in the XRD pattern of the absorption layer 22, and is simply negatively correlated with the relative intensity $I_{KR}$ of the rutile phase. Therefore, it is advantageous for the absorption layer 22 to satisfy the conditions of $0.6 \leq I_{KA} \leq 1.0$ and $I_{KR} \leq 0.2$. It is considered that in order to increase the surface area of the active surface 21a, it is advantageous to increase the specific surface area of the surface layer 21. If the surface layer 21 contains an anatase phase and substantially contains no rutile phase, the specific surface area of the surface layer 21 is likely to be increased.

A relative intensity $I_{HA}$ of the anatase phase in an X-ray diffraction pattern of the surface layer 21 may satisfy a condition of $0 < I_{HA} \leq 0.6$. Accordingly, the specific surface area of the surface layer 21 is likely to be increased, so that the reaction rate of the reaction for processing the food F is more likely to be increased.

The relative intensity $I_{KA}$ of the anatase phase and the relative intensity $I_{KR}$ of the rutile phase in the XRD pattern of the absorption layer 22 may satisfy conditions of $0 < I_{KA} < 0.6$ and $I_{KR} \leq 0.2$. The relative intensity $I_{HA}$ of the anatase phase in the X-ray diffraction pattern of the surface layer 21 may satisfy a condition of $0.6 < I_{HA} \leq 1.0$. A relative intensity $I_{HR}$ of the rutile phase in the X-ray diffraction pattern of the surface layer 21 may satisfy a condition of $I_{KR} \leq 0.2$.

As shown in FIG. 1, the food processing apparatus 1a further includes, for example, a support 25. The support 25 is disposed at a position closer to the main surface 22a than to the active surface 21a in the thickness direction of the catalyst film 20, and supports the catalyst film 20. Accordingly, the catalyst film 20 can be stably present in the food processing apparatus 1a.

The material of the support 25 is not limited to any specific material, and is, for example, glass. The support 25 typically has low light response characteristics for the ultraviolet light U and a high transmittance for the ultraviolet light U. Examples of the material of the support 25 include quartz glass and borosilicate glass.

The shape of the support 25 is not limited to any specific shape as long as the support 25 can support the catalyst film 20. The support 25 has, for example, a cavity 25h. The light source 30 is disposed, for example, in the cavity 25h. The support 25 has, for example, a tubular shape. The support 25 may have a hollow spherical shape, or may have a hollow polyhedral shape.

As shown in FIG. 1, the food processing apparatus 1a may further include an agitator 40. The agitator 40 includes, for example, a rotary shaft and agitating blades attached to the rotary shaft. In order to increase the reaction rate of the reaction for processing the food F, it is advantageous to transport the food F to the active surface 21a of the catalyst film 20 at a high speed. There are two types of mass transfer, that is, diffusion transfer due to concentration gradients and convective transfer in which movement is made with site flow. The mass transfer rate in the food F is increased by the operation of the agitator 40. The concentration of the component C contained in the food is easily kept high at the interface between the catalyst film 20 and the food F by the operation of the agitator 40. In addition, development of site flow of the food F in the space 15 of the container 10 can be promoted by the operation of the agitator 40. The rotary shaft of the agitator 40 can be inserted into the container 10 from above or below.

As shown in FIG. 1, a catalyst-attached light source 2 can be provided. The catalyst-attached light source 2 includes the catalyst film 20 and the light source 30. The catalyst-attached light source 2 is used in the food processing apparatus 1a.

EXAMPLES

The food processing apparatus of the present disclosure will be described in more detail by means of Examples. The food processing apparatus of the present disclosure is not limited to the following Examples.

<Example 1>

A bench top-type food processing apparatus according to Example 1 having the same configuration as the food processing apparatus 1a shown in FIG. 1 was produced. The container of the food processing apparatus was capable of containing 300 cm$^3$ of a liquid. A sleeve made of quartz glass was used as a support. The sleeve had a cylindrical shape having a length of 210 mm and an outer diameter of 54 mm, and one end in the longitudinal direction of the sleeve was closed. A high-pressure mercury lamp HL100 manufactured by SEN LIGHTS Corporation was disposed as a light source inside the sleeve. The power consumption of the light source was 100 W. The bulb length of the light source was 12.7 cm, and the length of an emitting part of the light source was 8.5 cm. The wavelength of light emitted from the light source was 365 nm. The light intensity of the light emitted from the light source decreased inversely proportional to the distance from the light source, and the light intensity of the emitted light at a position away from the lamp surface by 20 mm was 100 mW/cm$^2$. A magnetic agitating element was placed at a bottom surface of the container.

A catalyst film was formed on the outer surface of the sleeve by a sol-gel method. While agitating 0.092 mol (21 g) of titanium ethoxide, 14.6 cm$^3$ of hydrochloric acid having a concentration of 20% by mass was gradually added to the titanium ethoxide to obtain a mixed solution. To the obtained mixed solution, a solution obtained by mixing 6 g of a surfactant Pluronic P123 and 74 cm$^3$ of 1-butanol was added, and the mixture was agitated for 3 hours to obtain a sol A. The average molecular weight of Pluronic P123 was 5800. The sol A was applied to the outer surface of the sleeve by spin coating at 3000 revolutions per minute (rpm) for 30 seconds to form a coating film. This coating film was fired in an electric furnace at 500°C for 2 hours to obtain a catalyst thin film having a thickness of about 400 nm to 500 nm. A step including the formation of the coating film and the firing of the coating film was repeated four times to obtain an absorption layer according to Example 1. The sol A was applied onto the absorption layer according to Example 1 by spin coating at 3000 revolutions per minute (rpm) for 30 seconds to form a coating film. This coating film was fired in an electric furnace at 500°C for 2 hours to form a surface layer according to Example 1 to obtain a catalyst film according to Example 1 including the absorption layer and the surface layer.

A transmission spectrum of the catalyst film according to Example 1 in a wavelength range of 200 nm to 2500 nm was determined using a UV-visible/NIR spectrophotometer V-770 manufactured by JASCO Corporation. The thickness of the catalyst film according to Example 1 was determined from an interference pattern appearing in the transmission spectrum, using a film thickness calculation program provided by JASCO Corporation. As a result, the thickness of the catalyst film according to Example 1 was 2028.0 nm.

The light absorptivities of the catalyst film according to Example 1 at wavelengths of 365 nm, 350 nm, and 330 nm were determined using the UV-visible/NIR spectrophotometer V-770. As a result, the light absorptivities of the catalyst film according to Example 1 were as shown in Table 1.

[Table 1]

| Wavelength [nm] | Light absorptivity of catalyst film [%] |
|---|---|
| 365 | 53 |
| 350 | 94 |
| 330 | 100 |

In the container of the food processing apparatus according to Example 1, a 10 mass% aqueous yeast solution was put. The temperature of the aqueous yeast solution was adjusted to 5°C. The light source of the food processing apparatus was turned on for 96 hours, and then the light source was turned off. While the light source was turned on, the magnetic agitating element was rotated to agitate the aqueous yeast solution. The lipid peroxide concentrations of liquid samples taken from the aqueous yeast solution immediately before the light source was turned on and the aqueous yeast solution immediately after the light source was turned off were determined by a colorimetric method, using a Lipid Hydroperoxide Assay Kit provided by Funakoshi Co., Ltd. As a result, it was confirmed that the concentration of lipid peroxide, which is a reaction product, was increased immediately after the light source was turned off, compared to that immediately before the light source was turned on.

In the container of the food processing apparatus according to Example 1, a formic acid aqueous solution having a concentration of 10 mg/liter was put as a model food material aqueous solution. The temperature of the formic acid aqueous solution was adjusted to room temperature. The light source was turned on, and after a predetermined time elapsed, the light source was turned off, and a part of the formic acid aqueous solution was taken as a liquid sample. The concentration of formic acid in the liquid sample was measured by high-performance liquid chromatography (HPLC). A reaction rate constant k of a photocatalytic reaction was determined using data regarding a reaction rate obtained from the measurement results and a linear rate equation. As a result, the constant k was 6.4 [h$^{-1}$]. As used herein, the "h" means "hour". The amount of formic acid that reacted was 3.7 mg/liter.

<Example 2>

A food processing apparatus according to Example 2 was produced in the same manner as Example 1, except for the following points. 0.025 mol (2.52 g) of acetylacetone and 0.05 mol (17.50 g) of titanium butoxide were mixed with 32 cm$^3$ of 1-butanol in this order, and the mixture was agitated for 1 hour at room temperature to obtain a mixed solution. A liquid obtained by mixing 0.15 mol (9.05 g) of isopropanol and 3.64 cm$^3$ of water was mixed with this mixed solution, and the mixture was further agitated for 1 hour to obtain a mixed solution. To this mixed solution, 0.04 mol (1.66 g) of acetonitrile was added, and the mixture was agitated for 1 hour to obtain a sol B. The sol B was applied to the surface of an absorption layer by spin coating at 6000 rpm for 30 seconds, and was fired in an electric furnace at 600°C for 2 hours to form a surface layer according to Example 2 to obtain a catalyst film according to Example 2 including the absorption layer and the surface layer. The thickness of the catalyst film according to Example 2 was measured in the same manner as that of the catalyst film according to Example 1. As a result, the thickness of the catalyst film according to Example 2 was 2156.0 nm. The light absorptivities of the catalyst film according to Example 2 at wavelengths of 365 nm, 350 nm, and 330 nm were determined using the UV-visible/NIR spectrophotometer V-770. As a result, the light absorptivities of the catalyst film according to Example 2 were as shown in Table 2. The light absorptivities of the catalyst film according to Example 2 at these wavelengths were 50% or more.

[Table 2]

| Wavelength [nm] | Light absorptivity of catalyst film [%] |
|---|---|
| 365 | 53 |
| 350 | 97 |
| 330 | 100 |

A reaction rate constant k of a photocatalytic reaction was determined, using a formic acid aqueous solution having a concentration of 10 mg/liter, in the same manner as Example 1, except that the food processing apparatus according to Example 2 was used instead of the food processing apparatus according to Example 1. As a result, the constant k was 9.6 [h$^{-1}$].

<Comparative Example 1>

A food processing apparatus according to Comparative Example 1 was produced in the same manner as Example 1, except for the following points. A catalyst film according to Comparative Example 1 was formed in the same manner as Example 1, except that a layer corresponding to the absorption layer according to Example 1 was not formed in the formation of the catalyst film. The thickness of the catalyst film according to Comparative Example 1 was measured by the same method as that for the catalyst film according to Example 1, and was 79.7 nm. The light absorptivities of the catalyst film according to Comparative Example 1 at wavelengths of 365 nm, 350 nm, and 330 nm were determined using the UV-visible/NIR spectrophotometer V-770. As a result, the light absorptivities of the catalyst film according to Comparative Example 1 were as shown in Table 3. The light absorptivities of the catalyst film according to Comparative Example 1 at these wavelengths were less than 50%.

[Table 3]

| Wavelength [nm] | Light absorptivity of catalyst film [%] |
|---|---|
| 365 | 0 |
| 350 | 9 |
| 330 | 46 |

A reaction rate constant k of a photocatalytic reaction was determined, using a formic acid aqueous solution having a concentration of 10 mg/liter, in the same manner as Example 1, except that the food processing apparatus according to Comparative Example 1 was used instead of the food processing apparatus according to Example 1. As a result, the constant k was 1.1 [$h^{-1}$]. The amount of formic acid that reacted was 0.3 mg/liter.

As shown in Table 4, the reaction rate constants of the photocatalytic reactions in the food processing apparatus according to Examples 1 and 2 were higher than the reaction rate constant of the photocatalytic reaction in the food processing apparatus according to Comparative Example 1. It is understood that the light absorptivity of the catalyst film at the wavelength of ultraviolet light being 50% or more is advantageous in increasing the reaction rate constant of the photocatalytic reaction.

[Table 4]

| | Thickness of catalyst film [nm] | Absorptivity of catalyst film at wavelength of ultraviolet light [%] | Reaction rate constant [$h^{-1}$] |
|---|---|---|---|
| Example 1 | 2028.0 | 50% or more | 6.4 |
| Example 2 | 2156.0 | 50% or more | 9.6 |
| Comparative Example 1 | 79.7 | Less than 50% | 1.1 |

<Evaluation of thickness of catalyst film>

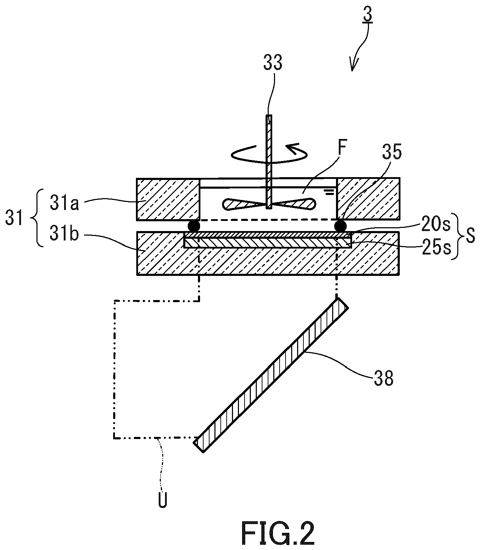

An apparatus 3 shown in FIG. 2 was produced. The apparatus 3 included a container 31, an agitator 33, an O-ring 35, a sample S, and a mirror 38. The container 31 had a plate-shaped upper member 31a having a through hole at the center thereof, and a plate-shaped lower member 31b having a recess at the center thereof. The sample S had a support plate 25s made of quartz glass, and a catalyst film 20s formed on the support plate 25s. The support plate 25s had a square shape of 30 square millimeters in a plan view. The sample S was housed in the recess of the lower member 31b such that the catalyst film 20s was positioned above the support plate 25s. The O-ring 35 was placed between the upper member 31a and the lower member 31b, and the upper member 31a and the lower member 31b were assembled to form the container 31. The O-ring 35 was in contact with the periphery of the catalyst film 20s and an edge of the lower surface of the upper member 31a that is in contact with the central opening, and sealed the gap therebetween. The mirror 38 was placed below the container 31 such that ultraviolet light U incident on the mirror 38 in the horizontal direction was directed to the sample S.

The catalyst film 20s in the sample S was formed by a sol-gel method. A sol was prepared under the same conditions as those for the sol A, and this sol was applied to the support plate 25s by spin coating to form a coating film. This coating film was fired in an electric furnace at 500°C for 2 hours to obtain the catalyst film 20s. By adjusting the number of times of the formation and firing of the coating film, nine samples S having catalyst films 20s having different thicknesses were prepared. The thicknesses of the catalyst films 20s in these samples were 411.5 nm, 828.0 nm, 1151.0 nm, 1511.5 nm, 2156.0 nm, 2826.5 nm, 3490.5 nm, 4154.5 nm, and 4819.0 nm. The thickness of the catalyst film 20s in each sample S was determined in the same manner as the thickness of the catalyst film according to Example 1.

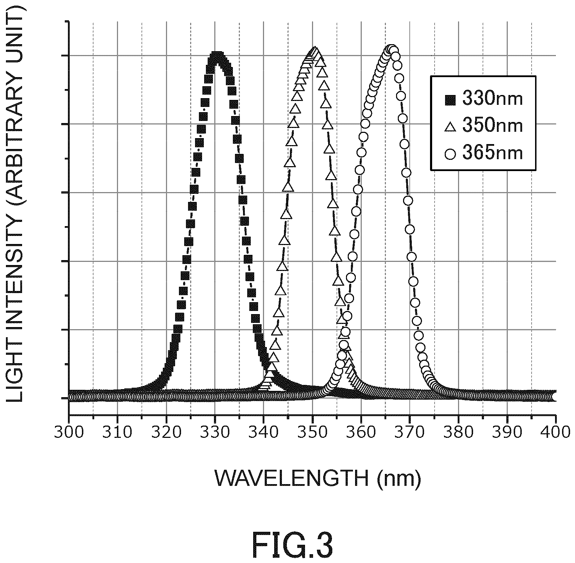

Three types of monochromatized ultraviolet light having center wavelengths of 330 nm, 350 nm, and 365 nm were adjusted by combining a xenon lamp MAX-303 manufactured by Asahi Spectra Co., Ltd. and a bandpass filter for monochromatization. A light intensity spectrum of each monochromatized ultraviolet light is shown in FIG. 3. The bandwidths of these types of ultraviolet light were each the center wavelength ± 5 nm. The light intensity of each monochromatized ultraviolet light was adjusted such that the light intensity of the ultraviolet light U in an irradiation surface was uniform, using a light intensity space uniformizing lens that is a rod lens manufactured by Asahi Spectra Co., Ltd. As a result, the light intensity in the surface of the catalyst film 20s was 3 mW/cm$^2$, and was uniform over the entirety of the surface of the catalyst film 20s.

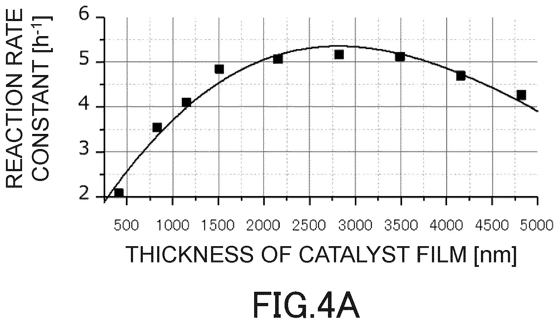

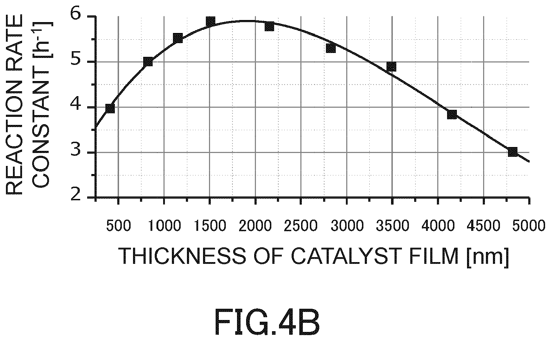

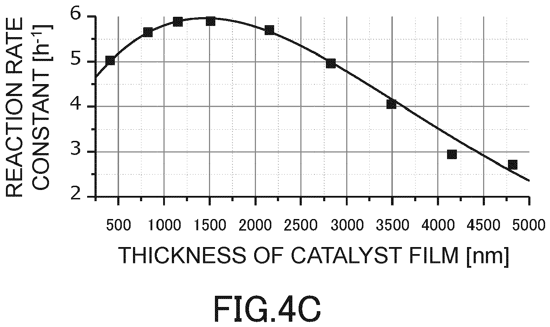

A formic acid aqueous solution having a concentration of 10 mg/liter was put in the inside of the container 31. The volume of the formic acid aqueous solution was 5 milliliters. The agitator 33 was rotated to agitate the formic acid aqueous solution. The ultraviolet light U adjusted as described above was directed to the bottom surface of the container 31 and passed through the support 25s to irradiate the catalyst film 20s. The concentration of formic acid in a liquid sample taken from the formic acid aqueous solution after a predetermined time elapsed from the irradiation of the catalyst film 20s with the ultraviolet light U was measured by HPLC. A reaction rate constant of a photocatalytic reaction was determined using data regarding a reaction rate obtained from the measurement results and a linear rate equation. The results in the case where the three types of monochromatized ultraviolet light having the center wavelengths of 365 nm, 350 nm, and 330 nm were used for adjusting the ultraviolet light U are shown in FIG. 4A, FIG. 4B, and FIG. 4C, respectively.

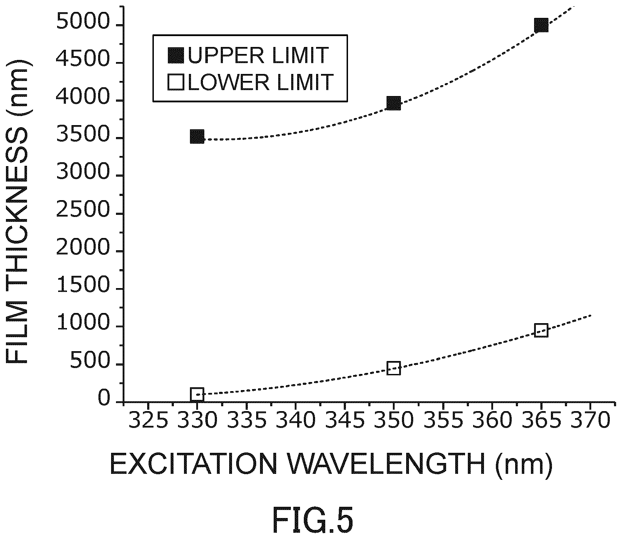

In FIG. 4A, FIG. 4B, and FIG. 4C, the reaction rate constants are plotted with respect to the thicknesses of the catalyst films. The plots in FIG. 4A, FIG. 4B, and FIG. 4C each had an upward convex peak shape. In addition, the peak of the plots tended to shift toward the long wavelength side as the wavelength of the ultraviolet light U was longer. In each of the graphs shown in FIG. 4A, FIG. 4B, and FIG. 4C, least-squares fitting of the data was performed using a Giddings peak function. In each of FIG. 4A, FIG. 4B, and FIG. 4C, a function obtained by this fitting is shown as a solid graph. The upper and lower limits of the wavelength at which the reaction rate constant was 70% or more of the maximum value in the function obtained by the fitting were specified. The relationship between the obtained upper and lower limits and the wavelength of the ultraviolet light U is shown in FIG. 5. Each of the relationship between the upper limit and the wavelength of the ultraviolet light U and the relationship between the lower limit and the wavelength of the ultraviolet light U was approximated by a quadratic function $A + B \times \lambda + C \times \lambda^2$. By this approximation, $F(\lambda)$ shown in Expression (3) above and $G(\lambda)$ shown in Expression (4) above were obtained.

<Examples 4 to 6>

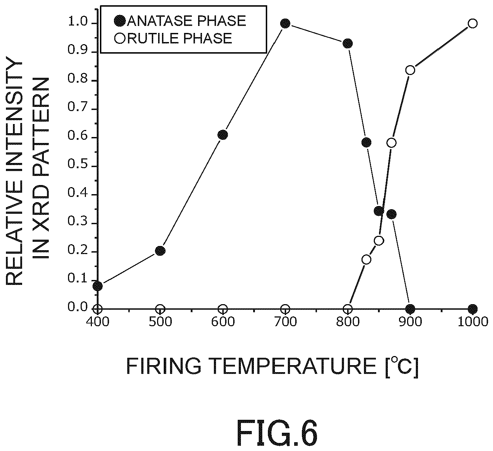

The sol A was applied onto a predetermined substrate by spin coating to form a coating film, and this coating film was fired for 2 hours using an electric furnace set at a predetermined temperature in the range of 400°C to 1000°C, to form a film for XRD measurement. An XRD pattern of the film for XRD measurement was obtained using an XRD apparatus RINT-TTR III manufactured by Rigaku Corporation. Cu-Kα rays were used as X rays. The relative intensity of an anatase phase and the relative intensity of a rutile phase were determined from the obtained XRD pattern. The relationship between these relative intensities and the firing temperature of the coating film is shown in FIG. 6. In the obtained XRD pattern, the relative intensity of the anatase phase was determined by dividing the area of a peak around 25.3° derived from the (101) plane of the anatase phase by the area of a peak indicating the maximum intensity. The relative intensity of the rutile phase was determined by dividing the area of a peak around 27.5° derived from the (110) plane of the rutile phase by the area of the peak indicating the maximum intensity.

Food processing apparatuses according to Examples 4, 5, and 6 were produced in the same manner as Example 1, except for the following points. The firing temperature of a sol coating film for an absorption layer and the firing temperature of a sol coating film for a surface layer in the formation of a catalyst film were adjusted as shown in Table 5. The thicknesses of the catalyst films in the food processing apparatuses according to Examples 4, 5, and 6 were measured in the same manner as that of the catalyst film according to Example 1, and were about 2100 nm. The light absorptivities of the catalyst films in the food processing apparatuses according to Examples 4, 5, and 6 at wavelengths of 365 nm, 350 nm, and 330 nm were determined in the same manner as Example 1. As a result, the light absorptivities of the catalyst films according to Examples 4, 5, and 6 were as shown in Table 6. The light absorptivities of each catalyst film at these wavelengths were 50% or more.

Table 5

|  | Firing temperature for absorption layer [°C] | Firing temperature for surface layer [°C] |
|---|---|---|
| Example 1 | 500 | 500 |

(continued)

|  | Firing temperature for absorption layer [°C] | Firing temperature for surface layer [°C] |
|---|---|---|
| Example 4 | 500 | 700 |
| Example 5 | 850 | 500 |
| Example 6 | 850 | 700 |

[Table 6]

| Wavelength [nm] | Absorptivity [%] |
|---|---|
| 365 | 54 |
| 350 | 96 |
| 330 | 100 |

Reaction rate constants k of photocatalytic reactions were determined, using a formic acid aqueous solution having a concentration of 10 mg/liter, in the same manner as Example 1, except that the food processing apparatuses according to Examples 4, 5, and 6 were used instead of the food processing apparatus according to Example 1. The relationship between the relative intensities of the anatase phase and the rutile in the XRD pattern of the absorption layer estimated from the relationship shown in FIG. 6, the relative intensities of the anatase phase and the rutile in the XRD pattern of the surface layer estimated from the relationship shown in FIG. 6, and the reaction rate constant k is shown in Table 7. In Table 7, $I_{KA}$ and $I_{KR}$ denote the relative intensities of the anatase phase and the rutile in the XRD pattern of the absorption layer, respectively, and $I_{HA}$ and $I_{HR}$ denote the relative intensities of the anatase phase and the rutile in the XRD pattern of the absorption layer, respectively. The absorption layer is covered with a sol coating film for forming the surface layer when the surface layer is formed. Therefore, the relative intensities of the anatase phase and the rutile in the XRD pattern of the absorption layer are hardly affected by the firing for forming the surface layer.

[Table 7]

|  | Absorption layer | Surface layer | Reaction rate constant [h$^{-1}$] |
|---|---|---|---|
| Example 1 | $0 < I_{KA} < 0.6$ $I_{KR} = 0$ | $0 < I_{HA} < 0.6$ $I_{HR} = 0$ | 6.4 |
| Example 4 | $0 < I_{KA} < 0.6$ $I_{KR} = 0$ | $0.6 \leq I_{HA} \leq 1.0$ $I_{HR} \leq 0.2$ | 4.9 |
| Example 5 | $0.6 \leq I_{KA} \leq 1.0$ $I_{KR} \leq 0.2$ | $0 < I_{HA} < 0.6$ $I_{HR} = 0$ | 9.0 |
| Example 6 | $0.6 \leq I_{KA} \leq 1.0$ $I_{KR} \leq 0.2$ | $0.6 \leq I_{HA} \leq 1.0$ $I_{HR} \leq 0.2$ | 5.5 |

<Evaluation of presence or absence of odor>

A sol prepared in the same manner as the sol A was applied onto the support plate 25s made of quartz glass in the apparatus 3 by spin coating to form a coating film. This coating film was fired in an electric furnace at 500°C for 2 hours. The formation of the coating film and the firing of the coating film were repeated four times to form an absorption layer, and the sol prepared in the same manner as the sol A was applied onto the absorption layer by spin coating to form a coating film. This coating film was fired in an electric furnace at 500°C for 2 hours to form a surface layer. Thus, a sample J was produced. The support plate 25s had a square shape of 30 square millimeters in a plan view.

A sample K was produced in the same manner as the sample J, except that a layer corresponding to the absorption layer in the sample J was not formed. As a sample L, the support plate 25s was used as it was.

In the apparatus 3, an aqueous yeast solution having a concentration of 10 mg/liter was reacted in the same manner as for the case where the sample S was used, except that each of the samples J, K, and L was used instead of the sample S and the aqueous yeast solution was used instead of the formic acid aqueous solution. A sensory evaluation according to a two-point discrimination test method was conducted by three evaluators for the presence or absence of odor at the liquid sample after the reaction. As a result, when the sample J was used, all the three evaluators did not feel any odor at the liquid sample after the reaction. Meanwhile, when the samples K and L were used, all the three evaluators felt odor at the liquid sample after the reaction. It was suggested that when the sample J was used, deterioration of the components contained in the aqueous yeast solution due to the ultraviolet light did not occur, and when the samples K and L were used, deterioration of the components contained in the aqueous yeast solution due to the ultraviolet light occurred.

INDUSTRIAL APPLICABILITY

The food processing apparatus of the present disclosure is useful in the processing of various types of food containing food materials.

**Claims**

1.   A food processing apparatus comprising:

a container having a space for containing food;
a catalyst film having an active surface in contact with the space; and
a light source disposed at a position closer to a main surface of the catalyst film located on a side opposite to the active surface than to the active surface in a thickness direction of the catalyst film, and configured to emit ultraviolet light toward the catalyst film, wherein
an absorptivity of the catalyst film for the ultraviolet light is 50% or more.

2.   The food processing apparatus according to claim 1, wherein the catalyst film has a thickness d [nm] which is equal to or greater than a value of $F(\lambda)$ below in which a wavelength $\lambda$ [nm] of the ultraviolet light is a variable and is equal to or less than a value of $G(\lambda)$ below in which the wavelength of the ultraviolet light is a variable:

$$F(\lambda) = 45673.65 - 284.65329 \times \lambda + 0.44409 \times \lambda^2,$$

$$G(\lambda) = 149923.62 - 882.77357 \times \lambda + 1.33037 \times \lambda^2.$$

3.   The food processing apparatus according to claim 1 or 2, wherein the catalyst film includes a surface layer having the active surface, and an absorption layer having the main surface.

4.   The food processing apparatus according to any one of claims 1 to 3, wherein the catalyst film contains a metal oxide.

5.   The food processing apparatus according to claim 4, wherein

the metal oxide has a composition of $Ti_mO_n$, and
the composition satisfies conditions of $1 \leq m \leq 2$ and $2 \leq n \leq 3$.

6.   The food processing apparatus according to claim 5, wherein

the catalyst film includes a surface layer having the active surface, and an absorption layer having the main surface,
a relative intensity $I_{KA}$ of an anatase phase and a relative intensity $I_{KR}$ of a rutile phase in an X-ray diffraction pattern of the absorption layer satisfy conditions of $0.6 \leq I_{KA} \leq 1.0$ and $I_{KR} \leq 0.2$, and
the surface layer contains an anatase phase and substantially contains no rutile phase.

7.   The food processing apparatus according to claim 6, wherein a relative intensity $I_{HA}$ of the anatase phase in an X-ray diffraction pattern of the surface layer satisfies a condition of $0 < I_{HA} \leq 0.6$.

8.   The food processing apparatus according to any one of claims 1 to 7, further comprising a support disposed at a position closer to the main surface than to the active surface in the thickness direction of the catalyst film, and configured to support the catalyst film.

9.   The food processing apparatus according to claim 8, wherein

the support has a cavity, and

the light source is disposed in the cavity.

10. A catalyst-attached light source comprising:

a catalyst film having an active surface; and
a light source disposed at a position closer to a main surface of the catalyst film located on a side opposite to the active surface than to the active surface in a thickness direction of the catalyst film, and configured to emit ultraviolet light toward the catalyst film, wherein
the catalyst-attached light source is used in the food processing apparatus according to any one of claims 1 to 9.

FIG.1

FIG.2

FIG.3

FIG.4A

FIG.4B

FIG.4C

FIG.5

FIG.6

FIG.7

## INTERNATIONAL SEARCH REPORT

| | International application No. |
|---|---|
| | **PCT/JP2021/040501** |

**A. CLASSIFICATION OF SUBJECT MATTER**

*A23L 3/28*(2006.01)i; *A23L 3/3589*(2006.01)i
FI: A23L3/28; A23L3/3589

According to International Patent Classification (IPC) or to both national classification and IPC

**B. FIELDS SEARCHED**

Minimum documentation searched (classification system followed by classification symbols)

A23L3/28; A23L3/3589

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2014-213251 A (TAKATORI CORP) 17 November 2014 (2014-11-17) claims, paragraphs [0012], [0058], fig. 1, 2 | 1-10 |
| A | JP 2003-250514 A (NIPPON TECHNO KK) 09 September 2003 (2003-09-09) claims, examples, fig. 1 | 1-10 |
| A | JP 2007-209267 A (ACCEPTOR TECHNOLOGY:KK) 23 August 2007 (2007-08-23) claims, examples, fig. 1 | 1-10 |
| A | JP 2001-017144 A (MATSUSHITA REFRIG CO LTD) 23 January 2001 (2001-01-23) claims, fig. 1, 3, 4, 6 | 1-10 |
| A | JP 2016-202092 A (TOKUYAMA CORP) 08 December 2016 (2016-12-08) claims, drawings | 1-10 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 December 2021** | **21 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/040501**

| Patent document cited in search report | | | Publication date (day/month/year) | Patent family member(s) | Publication date (day/month/year) |
|---|---|---|---|---|---|
| JP | 2014-213251 | A | 17 November 2014 | (Family: none) | |
| JP | 2003-250514 | A | 09 September 2003 | (Family: none) | |
| JP | 2007-209267 | A | 23 August 2007 | (Family: none) | |
| JP | 2001-017144 | A | 23 January 2001 | (Family: none) | |
| JP | 2016-202092 | A | 08 December 2016 | WO 2016/171071 A1 claims, drawings TW 201702185 A | |

Form PCT/ISA/210 (patent family annex) (January 2015)

**EP 4 241 574 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003250514 A